# EUROPÄISCHE PATENTSCHRIFT

(11) **EP 2 001 712 B1**
(45) Veröffentlichungstag und Bekanntmachung des Hinweises auf die Patenterteilung: **17.03.2010**
(21) Anmeldenummer: 07727721.8
(22) Anmeldetag: 03.04.2007
(51) Int. Cl.: B60R 21/13

(54) **SCHUTZVORRICHTUNG IN KRAFTFAHRZEUGEN ZUM PERSONENSCHUTZ**
PROTECTION DEVICE IN MOTOR VEHICLES FOR PROTECTING INDIVIDUALS
DISPOSITIF DE PROTECTION DES PERSONNES DANS DES VEHICULES AUTOMOBILES

(30) Priorität: 06.04.2006 DE 102006016155
(43) Veröffentlichungstag der Anmeldung: 17.12.2008
(73) Patentinhaber: ISE Automotive GmbH, 51702 Bergneustadt (DE)
(72) Erfinder: RÖHNER, Stephan, 44287 Dortmund (DE); JANISCH, Mirko, 53797 Lohmar (DE); LANG, Jozsef, H-1131 Budapest (HU); SCHULTE, Michael, 57462 Olpe (DE); MENNE, Hans Gerd, 51702 Bergneustadt (DE); LIESAUS, Frank, 51702 Bergneustadt (DE)
(74) Vertreter: Wenzel & Kalkoff
(86) Internationale Anmeldenummer: PCT/EP2007/053250
(87) Internationale Veröffentlichungsnummer: WO 2007/113303

(56) Entgegenhaltungen:
- EP-A1- 1 162 333
- DE-A1- 19 960 764
- DE-B3- 10 353 867
- DE-C1- 10 203 710

## Beschreibung

Die Erfindung bezieht sich auf eine Schutzvorrichtung in Kraftfahrzeugen zum Personenschutz, welche ein bewegliches Element aufweist, das im Grundzustand durch eine auslösbare Haltevorrichtung, gebildet durch eine lösbare fahrzeugfeste Verbindung des beweglichen Elementes, in seiner Lage fixiert ist und im Gefahrenfall sensorgesteuert mittels eines gemeinsamen pyrotechnischen Aktuators auslösbar und unter Aktivierung des Schutzes ausstellbar ist, und welche eine Einrichtung zum Verriegeln des ausgestellten beweglichen Elementes aufweist, wobei dem pyrotechnischen Aktuator eine fahrzeugfest mittels ihrer Wandung angebrachte Antriebsdruckkammer, in welcher ein mit dem beweglichen Element verbundener Antriebskolben geführt aufgenommen ist, nachgeschaltet ist.

In Kraftfahrzeugen werden verstärkt Schutzvorrichtungen zum Personenschutz integriert, die zwei zueinander bewegbare Teile aufweisen, welche im Grundzustand, wenn keine Gefährdung zu erwarten ist, durch eine Haltevorrichtung in ihrer gegenseitigen Lage fixiert werden müssen, und die im Gefahrenfall unter Auslösen der Haltevorrichtung mit hoher Beschleunigung relativ zueinander bewegt und teilweise im aufgestellten Zustand gegen ein Wiedereindrücken verriegelt werden müssen. Diese Schutzvorrichtungen beziehen sich sowohl auf den Schutz der Fahrzeuginsassen als auch auf den Schutz von Passanten.

Typische Beispiele sind die bekannten Überrollschutzvorrichtungen für Cabriolets zum Schutz der Fahrzeuginsassen mit einem ausfahrbaren Überrollbügel, der im Grundzustand durch die Haltevorrichtung in einer abgesenkten Ruhelage in einem Gehäuse fixiert ist, und der im Überschlagfall sensorgesteuert mittels eines dann aktivierten Energiespeichers aus der abgesenkten Ruhelage in eine verriegelte Stützlage ausfährt. Stellvertretend für viele Druckschriften wird hierzu auf die DE 100 40 642 C2 verwiesen.

Ein weiteres Anwendungsgebiet sind die aktiven Unterfahrschutz-Systeme, wie sie z. B in der DE 103 16 847 A1 beschrieben sind. Ein aktives Unterfahrschutzsystem weist typischerweise eine ausstellbäre Klappe, die insbesondere bei Geländewagen am Vorderwagen unterhalb des Stoßfängers angebracht ist, auf, und die bei einem drohenden Frontalunfall ausgestellt wird, indem sie sich nach unten öffnet. Mit einer solchen Einrichtung sollen Höhen- und Konturdifferenzen zwischen zwei Fahrzeugen ausgeglichen werden, um ein Aufreiten des auffahrenden Wagens zu verhindern.

Typische Beispiele sind ferner die bekannten Vorrichtungen zum Schutz von Passanten bei einem Frontalaufprall auf die Fronthaube des Kraftfahrzeuges durch aktives Aufstellen der Fronthaube, insbesondere im Bereich des Haubenscharnieres, durch ein Aufstellelement, auch Aktor genannt, das aus einem karosseriefesten Gehäuse und einem darin mittels eines Energiespeichers aufstellbar gehalterten, mit der Fronthaube verbundenen Hubelement besteht. Im Grundzustand wird das Hubelement durch die Haltevorrichtung in der abgesenkten Ruhelage gehalten; im Gefahrenfall wird es sensorgesteuert unter Auslösen der Haltevorrichtung um einen vorgegebenen Hub aufgestellt.

Diese Vorrichtungen für einen Aufprallschutz nach dem Prinzip der aktiven Fronthaube sollen Passanten, d. h. Fußgänger, seien es Kinder oder Erwachsene, bzw. auch Zweiradfahrer oder Skater, die von einem Kraftfahrzeug angefahren, und auf dessen Front- oder Motorhaube sowie gegen die Windschutzscheibe geschleudert werden, gegen besonders schwere Verletzungen schützen. Dabei ist insbesondere der Kopf sowie der Oberkörper eines erwachsenen Fußgängers bzw.

Zweirad-Fahrers gefährdet, da dieser bei einem Zusammenprall mit einem Kraftfahrzeug - wie Crash-Versuche und auch die Erfahrungen gezeigt haben - etwa im hinteren, relativ harten Bereich an der Fronthaube am Übergang zur Windschutzscheibe aufschlägt und dabei erheblich verletzt wird. Vorgenannte Schutzvorrichtungen, wie sie z. B. stellvertretend für viele Schriften durch die DE 197 12 961 A1 bekannt geworden sind, entschärfen den vorgenannten harten Übergangsbereich zur Windschutzscheibe, indem sie ihn nachgiebiger gestalten.

Dadurch wird ein beim Brust- oder Kopfaufprall des Fußgängers im Sinne eines günstigeren Energieabbaues zur Wirkung kommender Deformationsweg der Fahrzeugkarosserie geschaffen, der für verringerte Kopf- und Brustverzögerungen und damit für geringere Verletzungsrisiken sorgt.

Zum Verriegeln des jeweils ausgestellten beweglichen Elementes in der Stützposition sind bei bekannten Schutz- oder Sicherheitsvorrichtungen separate, auf unterschiedliche Weise konstruierte Einrichtungen vorgesehen. Typischerweise wird die Verriegelungseinrichtung durch ein langgestrecktes Zahnelement in Verbindung mit einer drehbar angelenkten Sperrklinke gebildet.

Die auslösbaren Haltevorrichtungen weisen typischerweise ein Halteglied auf, welches mit dem beweglichen Element verbunden ist und welches in lösbarer Wirkverbindung mit einem Auslöseglied eines Sensorgesteuert aktivierbaren Aktuators steht.

Dabei ist es bekannt geworden, für das Auslösen der Haltevorrichtung und das Ausstellen des beweglichen Elementes einen gemeinsamen pyrotechnischen Aktuator vorzusehen. Wir verweisen hierzu auf die DE 199 60 764 B4. Obwohl in diesem Fall keine Aufstell-Federn vorgesehen sind, d.h. das bewegliche Element nicht gegen die Vorspannkräfte von Aufstell-Fedem im Grundzustand niedergehalten werden muss, ist eine Haltevorrichtung vorgesehen, um ein missbräuchliches Herausziehen und ein unbeabsichtigtes, z.B. durch Fahrbahnunebenheiten hervorgerufenes Bewegen des beweglichen Elementes zu vermeiden. Im bekannten Fall besteht dabei die Haltevorrichtung aus mehreren Bauteilen, z.B. bei einer Ausführungsform einmal aus einem Verriegelungsdom mit einem hinterschnittenen Flansch, der mit dem beweglichen Element in Verbindung steht und zum anderen mit einem karosseriefest an der Innenwand des pyrotechnischen Aktuators angebrachten Verriegelungskranz mit beweglichen Verriegelungshaken für einen lösbaren Wirkeingriff mit der Hinterschneidung am Verriegelungsdorn. Eine andere Ausführungsform weist einen Sperrstein auf, der in einer fahrzeugfesten Diffusorscheibe verschiebbar,gehaltert ist und über eine Bohrung in einem Fortsatz des beweglichen Elementes dieses im Ruhezustand lagefixiert.

Durch die Verwendung von mehreren Bauteilen, welche die Haltevorrichtung bilden, kann es zu Fehlfunktionen kommen, die auf einer Addition der unterschiedlichen Toleranzen zurückzuführen sind. Zusätzlich handelt es sich um eine teure Ausführungsform; aufgrund des Kostendrucks in der Automobilzulieferindustrie wird jedoch der Ruf nach kostengünstigen Systemen immer lauter.

Ferner ist der Gasdruck bis zum Zeitpunkt der Auslösung und fortsetzend während des Ausstellens des beweglichen Elementes nahezu konstant, d.h. die Weg/Zeit-Kurve des Aufstellelementes verläuft nahezu linear ansteigend.

Mit dem vorstehend beschriebenen bekannten System ist es ferner nicht beabsichtigt, eine möglichst hohe kinetische Energie bei kleinen pyrotechnischen Ladungen im Aktuator bereits nach wenigen mm-Ausfahrweg zu generieren. Dies wird auch unterstrichen durch die Tatsache, dass bei dem in der vorgenannten DE-Schrift aufgezeigten System mit Überströmbohrungen gearbeitet wird, um ein möglichst frühzeitiges Überleiten des Gasdrucks zu gewährleisten.

Der Erfindung liegt die Aufgabe zugrunde, die eingangs bezeichnete Schutzvorrichtung hinsichtlich des pyrotechnischen Löse- und Aufstellsystems so auszubilden, dass mit einer möglichst kleinen pyrotechnischen Ladung und einer definierten Haltekraft, die nicht durch zusätzliche Halteelemente aufgebracht wird, dem beweglichen Element bereits nach wenigen mm-Ausfahrweg eine sehr hohe kinetische Energie zukommen zu lassen.

Die Lösung dieser Aufgabe gelingt bei einer Schutzvorrichtung in Kraftfahrzeugen zum Personenschutz, welche ein bewegliches Element aufweist, das im Grundzustand durch eine auslösbare Haltevorrichtung, gebildet durch eine lösbare fahrzeugfeste Verbindung des beweglichen Elementes, in seiner Lage fixiert ist und im Gefahrenfall sensorgesteuert mittels eines gemeinsamen pyrotechnischen Aktuators auslösbar und unter Aktivierung des Schutzes ausstellbar ist, und welche eine Einrichtung zum Verriegeln des ausgestellten beweglichen Elementes aufweist, wobei dem pyrotechnischen Aktuator eine fahrzeugfest mittels ihrer Wandung angebrachte Antriebsdruckkammer, in welcher ein mit dem beweglichen Element verbundener Antriebskolben geführt aufgenommen ist, nachgeschaltet ist, erfindungsgemäß dadurch, dass die lösbare Verbindung durch eine unmittelbare lokal begrenzte kraft- und/oder formschlüssige oder stoffschlüssige Direktverbindung zwischen der Wandung der Antriebsdruckkammer und dem Antriebskolben gebildet ist, welche eine zu lösende Haltekraft aufweist, die mindestens 300 N und maximal 5000 N beträgt.

Durch die Erfindung wird eine Reihe von Vorteilen erzielt:
- Es können kleinere pyrotechnische Ladungen verwendet werden, was dazu führt, dass leichtere Materialien mit dünneren Materialquerschnitten gewählt werden können. Das wiederum führt zu deutlichen Kostenvorteilen.
- Das pyrotechnische Löse- und Aufstellsystem ist sehr einfach zu realisieren und gegen Fehlauslösungen sehr resistent.
- Das bewegliche Element erfährt schon nach wenigen mm-Ausstellweg eine hohe kinetische Energie. Es wird daher einmal sehr schnell ausgestellt und kann zum anderen bei einer Anwendung in einem Überrollschutzsystem bei einem Cabriolet mit geschlossenem Dach eine im Aufstellweg befindliche Heckscheibe durchschlagen, um den vollen Aufstellhub zu erreichen.

Ausgestaltungen und Weiterbildungen der Erfindung sind in Unteransprüchen gekennzeichnet und ergeben sich auch aus der folgenden Figurenbeschreibung.

Anhand von in den Patentzeichnungen in verschiedenen Ansichten und Zuständen dargestellten vorteilhaften Ausführungsbeispielen wird die Erfindung näher erläutert.

Es zeigen:
- Fig. 1: in einer schematisierten, teilweise weggebrochenen Frontansicht eine erste Ausführungsform eines erfindungsgemäßen aktiven Überrollbügelschutzsystems im Grundzustand, das einen gemeinsamen pyrotechnischen Aktuator zum Lösen der Haltevorrichtung und zum Aufstellen des Überrollbügels, aufweist,
- Fig. 2: das System nach Fig. 1, jedoch im aufgestellten Zustand des Überrollbügels,
- Fig. 3: in drei Figurenteilen A, B, C vergrößerte Ausschnitts-Darstellungen aus Fig. 1 zur Verdeutlichung der erfindungsgemäßen Haltevorrichtung ausgebildet durch eine direkte, lokal begrenzte kraft- und/oder formschlüssige oder stoffschlüssige Verbindung zwischen einem Bügelschenkel und einem Druckkammerrohr in Form einer Verquetschung (Figurenteil 3 A), die vollständig umlaufend rillenartig (Figurenteil 3 B) oder nur partiell rillenartig (Figurenteil 3 C) ausgebildet sein kann,
- Fig. 4: ebenfalls in einer schematisierten Frontansicht eine zweite Ausführungsform der erfindungsgemäßen Haltevorrichtung bei einem aktiven Überrollbügel-Schutzsystem analog Fig. 1 im Grundstand, wobei die Haltevorrichtung an einer zusätzlichen Kolben/Zylindereinheit zum Aufstellen des Überrollbügels angebracht ist,
- Fig. 5: das System nach Fig. 4, jedoch im aufgestellten Zustand des Überrollbügels,
- Fig. 6: in drei Figurenteilen A, B, C analog Fig. 3 vergrößerte Ausschnitt-Darstellungen aus Fig. 4 zur Verdeutlichung der an der zusätzlichen Kolben/Zylindereinheit angebrachten Haltevorrichtung in Form einer vollständig (Fig. 3 C) oder nur partiell (Fig. 3 B) umlaufenden Verquetschung oder Einprägung (Fig. 3 A),
- Fig. 7: eine Variante der zweiten Ausführungsform nach Fig. 4, mit einer Kolben /Zylindereinheit, bei der sich Kolben und Zylinder ab einer vorgegebenen Aufstellhöhe nicht mehr überlappen, und
- Fig. 8: ein Weg-Zeit Diagramm zur Darstellung der Löse- und Aufstellbewegung des Überrollbügels, bei der erfindungsgemäß ausgebildeten Haltevorrichtung im Vergleich zum Stand der Technik.

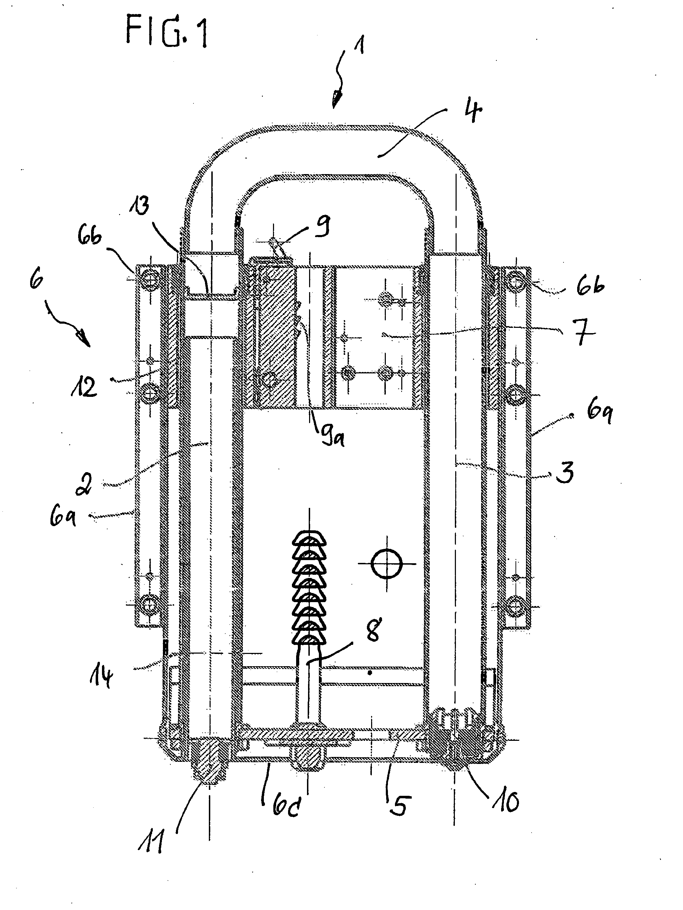

Die Zeichnungen zeigen in den Figuren 1 bis 7 eine Ausführungsform der erfindungsgemäßen Schutzvorrichtung in Gestalt eines aktiven Überrollschutzsystems zum Insassenschutz in einem Cabriolet, bei dem das bewegliche Element durch einen U-förmigen Überrollbügel 1 mit zwei parallelen rohrförmigen Bügelschenkeln 2, 3 und einem bogenförmigen Rohr-Querjoch 4 gebildet ist. Die freien Enden der Bügelschenkel 2, 3 sind dabei über eine Traverse 5 versteifend verbunden.

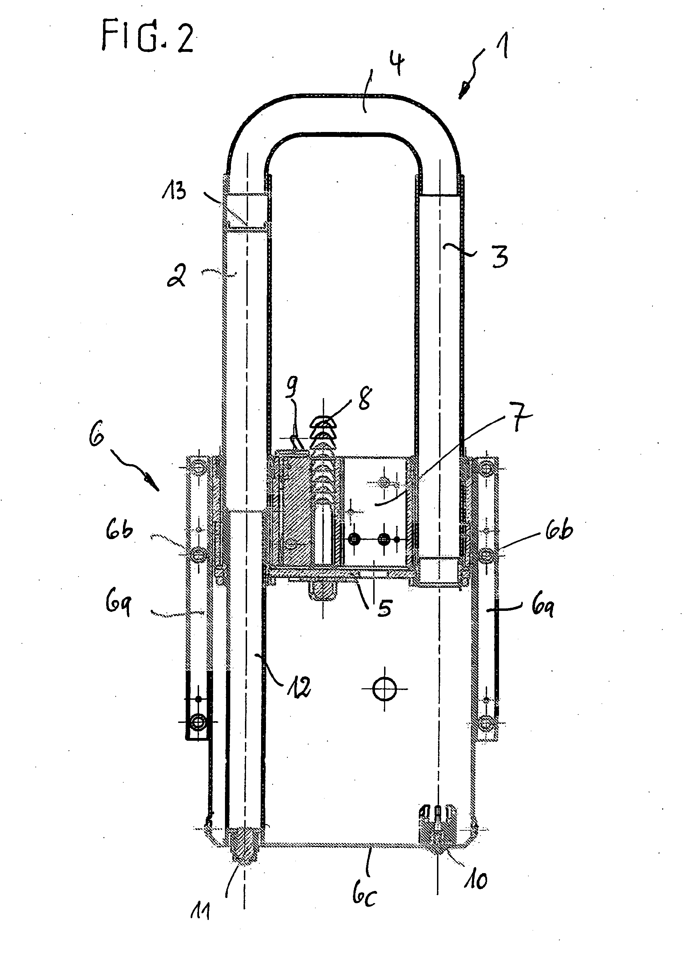

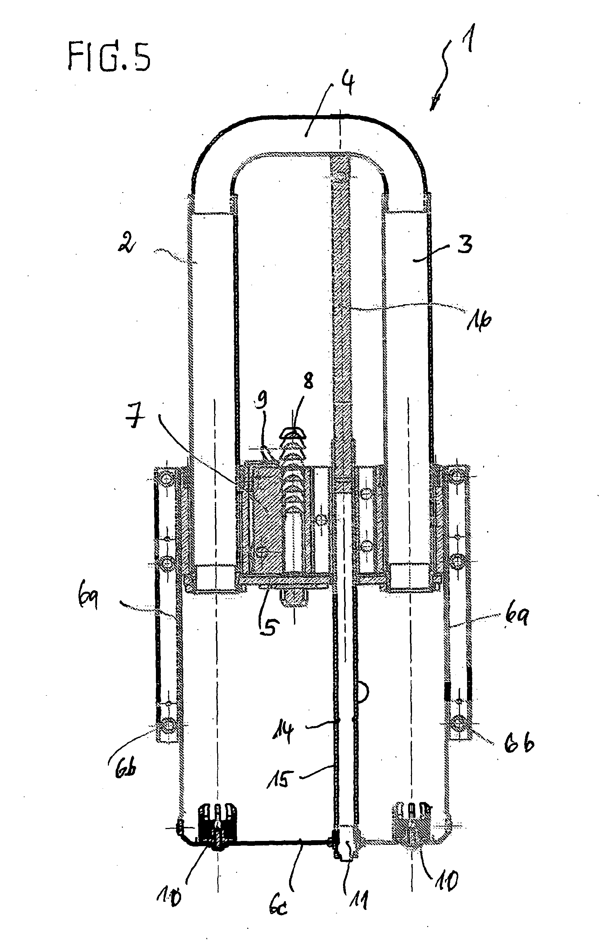

Der Überrollbügel 1 ist in einem kassettenartigen Gehäuse 6, das Seitenwände 6 a mit Befestigungslöchern 6 b und einem Boden 6 c aufweist, geführt gehaltert. Dazu ist im oberen Bereich des Gehäuses 6 ein Führungsblock 7 angebracht, der Führungsöffnungen für die Schenkelrohre 2, 3 aufweist. Auf der Traverse 5 ist ein Rastdorn 8 befestigt, der in Verbindung mit einer im Führungsblock drehbar angelenkten Sperrklinke, von der in den Figuren nur der manuell zu betätigende Entsperrhebelarm 9 sowie die Zahnungen 9 a für einen Wirkeingriff mit den Hinterschneidungen am Rastdorn 8 zu sehen sind, welche die Verriegelungseinrichtung der Wiedereinfahrsperre für den ausgefahrenen Überrollbügel gemäß den Figuren 2 und 5 bilden. Im Boden 6 c der Kassette sind ferner untere Führungselemente 10 mit Spreizarmen angebracht.

Ein derartiges Überrollbügelsystem ist bekannt und in zahlreichen Patentschriften beschrieben. Selbstredend können auch andere, bekannte vergleichbare Systeme eingesetzt werden.

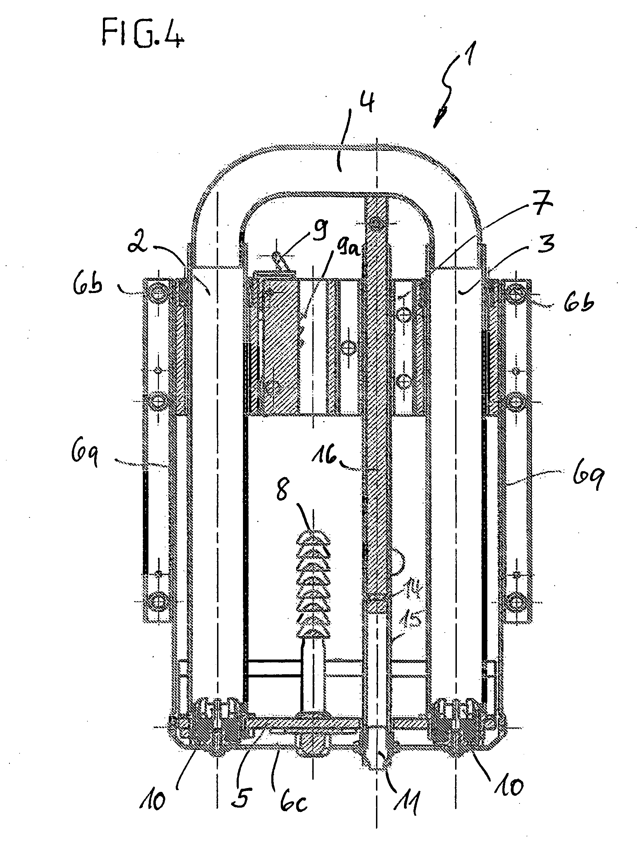

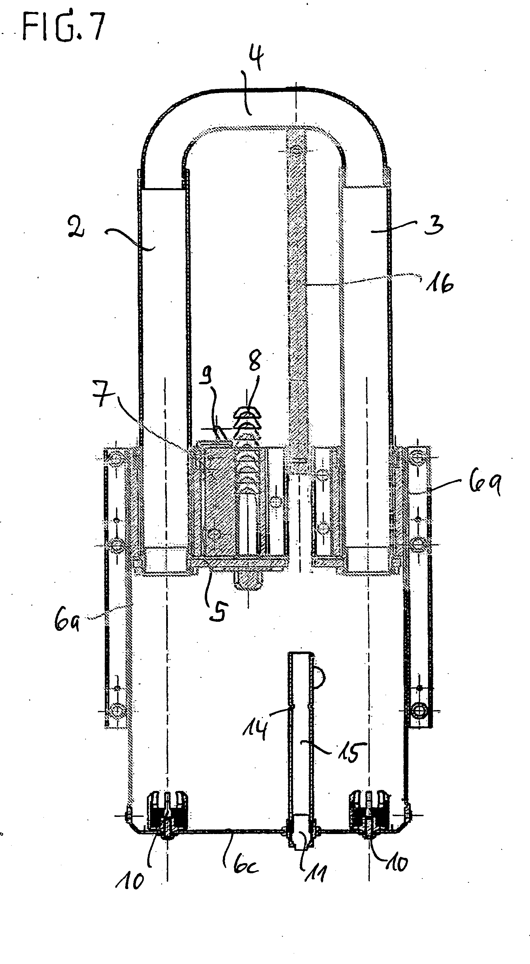

Die Erfindung bezieht sich auf die Ausbildung der Haltevorrichtung zur Lagefixierung des Überrollbügels im Grundzustand gemäß den Figuren 2 und 4 und des Antriebes zum Schnellaufstellen des Überrollbügels, wobei in den Figuren 1 bis 3 eine erste Variante und in den Figuren 4 bis 6 eine zweite Variante mit einer Untervariante in Fig. 7 dargestellt ist. In beiden Fällen soll dabei das Lösen der Haltevorrichtung und das Aufstellen mit einem gemeinsamen pyrotechnischen Aktuator erfolgen. Bei der ersten Variante erfolgt das Aufstellen durch die Treibgase des Aktuators direkt im Überrollbügel 1 selbst. Dazu ist nur für den rechten Bügelschenkel 3 ein unteres Führungselement 10 vorgesehen, wogegen im Bereich des linken Bügelschenkels 2 im Boden 6 c der gemeinsame pyrotechnische Aktuator 11 befestigt ist, in Verbindung mit einem in den linken Bügelschenkel 2 hineinragenden, ebenfalls im Boden befestigten Druckkammerohr 12. Damit der sich in diesem Druckkammerrohr nach dem Zünden des pyrotechnischen Aktuators 11 aufbauende Druck den Überrollbügel aufstellen kann, ist im oberen Bereich des linken Bügelschenkels 2 ein treibspiegelartiger Einsatz 13 angebracht, vorzugsweise eingeschweißt, und zwar auf einer solchen Höhe, dass er im eingefahrenen Zustand nach Fig. 1 im Bereich der Ausströmöffnung des Druckkammerrohres 12 liegt. Alternativ dazu könnte der Einsatz 13 auch im Bereich des freien Endes des rechten Bügelschenkels 3, dieses dicht verschließend, angebracht sein, so dass der Druck der aufstellenden Treibgase im gesamten Inneren des Überrollbügels ansteht.

Bei der Ausführungsform nach den Figuren 1 - 3 erfolgt daher das Aufstellen des Überrollbügels, anders als im Fall der eingangs zitierten DE 199 60 764 B4, ohne ein zusätzliches Zylinderrohr und eine Kolbenstange. Es wird vielmehr der Überrollbügel 1 selbst mit dem zugehörigen Einsatz 13 als Kolben genutzt mit variablem Kolbenraum. Die Variabilität des Kolbenraums kann dadurch erreicht werden, dass der Einsatz 13, der als Kolbenboden wirkt, in einem bestimmten, zu der Bügelausführung passenden Abstand zum pyrotechnischen Gasgenerator 11 sitzt.

Die auslösbare Haltevorrichtung 14 wird im Ausführungsbeispiel auf einfache Weise durch eine rillenartige Verquetschung (Verprägung) direkt zwischen dem Bügelschenkel 2 und dem Druckkammerohr 12, d. h. durch eine formschlüssige Verbindung, gebildet.

Es können aber auch andere form-, und/oder kraftschlüssige Verbindungen vorgesehen sein, wie eine Verstemmung, Bördelung, Presspassung etc. Auch durch den Druck der Treibgase lösbare stoffschlüssige Verbindungen sind denkbar. Beim kraft- und formschlüssigen Verbinden durch Verstemmen, Verquetschen oder Verbördeln wird Material aus dem feststehenden Teil in das ausfahrbare Teil getrieben. Wesentlich ist, dass die Verbindung zwischen Aufstellelement, bei den Figuren 1 - 3 dem linken Schenkelrohr, und dem fahrzeugfesten Druckkammerrohr direkt und lokal begrenzt erfolgt, damit keine zusätzlichen Teile notwendig sind und nach Lösen der Haltevorrichtung die Aufstellbewegung nicht beeinträchtigt wird.

Das Verbinden wird dabei zweckmäßig so ausgeführt, dass es zu einem Halten bis zu einer bestimmten Haltekraft größer 300 N kommt.

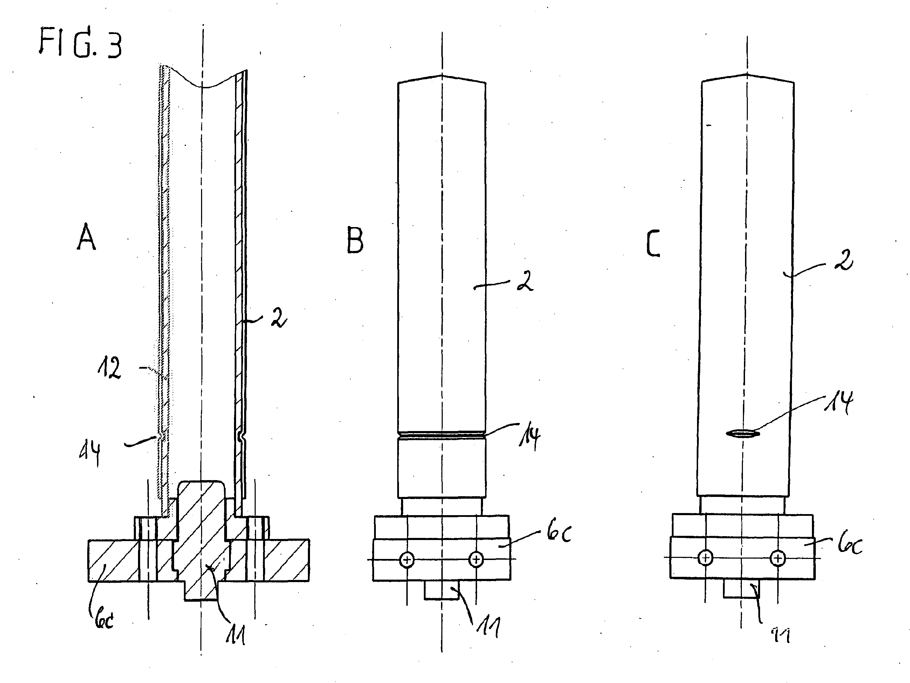

Wie dabei die Fig. 3 zeigt, kann die mechanische Verbindung, hier die Verquetschung der Haltevorrichtung 14, rillenartig umlaufend gemäß Figurenteil 3 B oder gemäß Figurenteil C nur partiell umlaufend rillenartig ausgebildet sein.

In einer Untervariante zu der Ausführungsform nach den Figuren 1 - 3 ist es auch denkbar, das Schenkelrohr 2 innerhalb der Druckkammer 12 anzuordnen, wobei dann die Haltevorrichtung 14 zugleich als Dichtung wirkt. Das Schenkelrohr kann dann ohne Beeinträchtigung durch die Verbindung 14 nach deren "Überwindung" aufgestellt werden.

Um diesen Effekt zu verhindern, kann bei der Ausführungsform nach Fig. 1 die Druckkammer 12 hinter der formschlüssigen Verbindung 14 beispielsweise verjüngt sein oder zumindest partiell verjüngt sein, wenn es sich auch nur um eine partielle Verquetschung handelt.

In den Figuren 4 bis 7 ist eine zweite Ausführungsform der Erfindung mit einer Untervariante in der Fig. 7 beschrieben.

Das dargestellte Überrollschutzsystem entspricht dabei demjenigen in Fig. 1. Daher sind alle Gleichteile mit demselben Bezugszeichen versehen und brauchen hier nicht mehr erläutert zu werden.

Während in der ersten Ausführungsform nach den Figuren 1 bis 3 der Aufstellkolben für das System durch den Überrollbügel ausgebildet ist, ist bei der zweiten Ausführungsform nach den Figuren 4 - 7 eine gesonderte Kolben/Zylindereinheit, an welcher auch die erfindungsgemäße Haltevorrichtung angebracht ist, zum Aufstellen des Überrollbügels 1 vorgesehen. Wie die Figuren 4 und 5 erkennen lassen, ist ein langgestrecktes zylindrisches Rohr 15 vorgesehen, welches im Boden 6 c des kassettenartigen Gehäuses 6 befestigt ist, wobei im Boden selbst eine mit dem zylindrischen Rohr 15 konzentrische Öffnung vorgesehen ist, in welcher der pyrotechnische Aktuator 11 von außen auswechselbar angebracht ist.

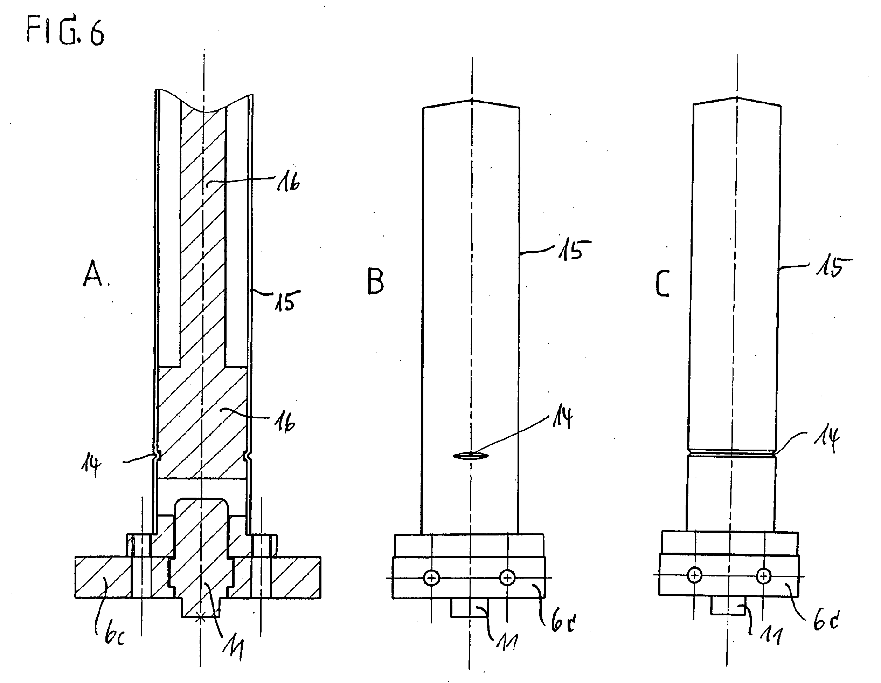

Im Innern des zylindrischen Rohres 15, das als Antriebszylinder fungiert, ist ein langgestreckter Antriebskolben 16 gleitend geführt aufgenommen, der mit seinem oberen Ende am Querjoch 4 des Überrollbügels 1 befestigt ist. In analoger Weise wie in der ersten Ausführungsform wird die Haltevorrichtung 14, wie insbesondere die Fig. 6A zeigt, durch eine rillenartige Verpressung zwischen dem zylindrischen Rohr 15 und dem Antriebskolben 16 gebildet, die eine bestimmte Halte- bzw. Auslösekraft vorgibt. Für diese form- bzw. kraftschlüssige und ggf. auch stoffschlüssige Verbindungsart, welche die auslösbare Haltevorrichtung bildet, gilt das zur Haltevorrichtung 14 der ersten Ausführungsform entsprechend. Die rillenartige Einschnürung kann daher ebenfalls vollständig umlaufend (Figurenteil 6 C) oder nur partiell umlaufend (Figurenteil 6 B) ausgebildet sein.

Die Kolbenstange 16 und das Zylinderrohr 15 müssen nicht über den gesamten Weg bis zur Verriegelung im Eingriff bleiben. Es ist durchaus vorstellbar, dass die Überdeckung von Kolbenstange und Zylinderrohr an einem bestimmten Punkt aufgehoben wird, die kinetische Energie aber trotzdem ausreicht, um den Überrollbügel 1 in stützender Position zu verriegeln.

Eine derartige Ausführungsform ist in Fig. 7 dargestellt.

Im Fertigungsprozess kann die pyrotechnische Aufstelleinheit wie folgt montiert werden:

Zuerst erfolgt die Montage des pyrotechnischen Gasgenerators 11 mit der Druckkammer 15 am feststehenden Teil des Systems; anschließend wird das am ausfahrbaren Überrollbügel 1 befindliche Aufstellelement, der Antriebskolben 16, in die Druckkammer gebracht. Danach werden beide Teile miteinander kraft-/form- oder stoffschlüssig verbunden, so dass die Halterung des Systems gegeben ist.

Die Kolben/Zylindereinheit 15, 16 ist vorzugsweise als Austauschteil ausgebildet, das nach einer Auslösung, die zerstörend hinsichtlich der Haltevorrichtung wirkt, leicht ersetzbar ist. Dazu ist die vorgenannte Einheit vorzugsweise als Kunststoff-Einheit ausgebildet, die auf kostengünstige Weise durch Spritzgießteile herstellbar ist. Auch können Aluminium- oder Stahlteile oder eine Kombination der verschiedenen Werkstoffe vorgesehen sein.

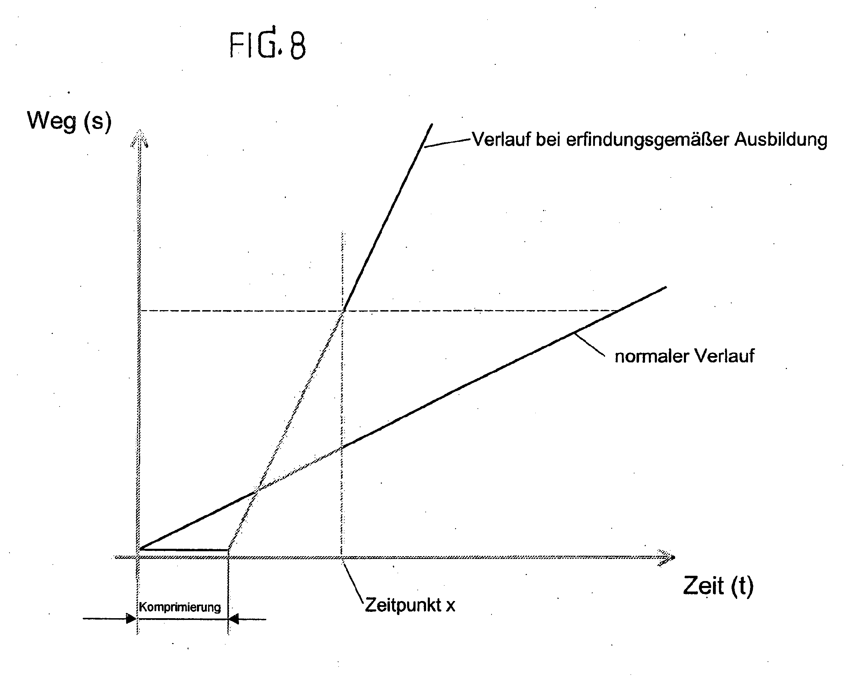

Die Funktionsweise der erfindungsgemäßen Haltevorrichtung im Vergleich zum nächstkommenden Stand der Technik und die dabei erzielten vorteilhaften Wirkungen sind wie folgt:
1. Ablauf bei einer konventionellen Haltevorrichtung, die bestimmungsgemäß eine möglichst geringe Haltekraft aufweisen soll, damit eine sichere Auslösung erfolgt.
   Nach dem Zünden des pyrotechnischen Gasgenerators baut sich kontinuierlich (im Millisekundenbereich) ein Druck in der Druckkammer auf. Sobald die Haltevorrichtung ausgelöst ist und das Produkt aus Druck x beaufschlagter Fläche größer ist als die Masse des Bügels (die sich als zu überwindende Kraft darstellt), wird dieser in Bewegung gesetzt. Das führt dazu, dass die Ausfahrgeschwindigkeit und damit die kinetische Energie erst am Ende des Fahnrvegs ihr Maximum erreicht. Die zugehörige Weg/Zeit-Kurve I in Fig. 8 verläuft relativ flach und ist durchgehend linear mit gleicher (kleiner) Steigung.
2. Ablauf bei der erfindungsgemäßen Haltevorrichtung mit einer relativ hohen Auslösekraft, die größer als 300 N ist, aber den Wert von 5000 N nicht überschreiten soll.
   Nach der Zündung des pyrotechnischen Gasgenerators 11 wird das Gas zunächst in der Druckkammer 12 bzw. 15 komprimiert, bis die Halterung 14, die eine Haltekraft größer 300 N besitzt, gelöst wird. Im Weg-Zeit-Diagramm der Aufstellbewegung gemäß der Kurve II in Fig. 8 erfolgt daher bis zu diesem Zeitpunkt keine Wegaufzeichnung Ist die Halterung 14 gelöst, kommt es durch das nunmehr stark komprimierte Gas zu einer schlagartigen Aufstellbewegung, die sich im Weg-Zeit-Diagramm als eine sehr steile Gerade darstellt.
   Bei Verwendung der gleichen Ladung, ohne einen solchen Widerstand, würde diese Gerade deutlich flacher ausfallen und die kinetische Energie bei geringen Ausfahrhöhen (z. B. in Höhe der Heckscheibe) wäre deutlich geringer.
   Durch die erfindungsgemäße Haltevorrichtung (Halterung), die quasi den "Patroneneffekt" ausnutzt (Geschoss in Patronenhülse eingebördelt) wird erreicht, dass bereits nach einem sehr kurzen Weg und einer sehr kurzen Zeit eine maximale kinetische Energie für den Überrollbügel zur Verfügung steht. Damit steht unmittelbar nach dem Auslösen eine hohe kinetische Energie zur Verfügung, die bereits nach einem geringen Hub in der Lage ist, eine Scheibe zu durchschlagen. Diese Zusammenhänge werden auch durch das Weg/Zeit-Diagramm nach Fig. 8 deutlich.
   Die steilere Gerade II zeigt, dass der Überrollbügel im gleichen Zeitabschnitt größere Wegabschnitte durchläuft, d. h. die Geschwindigkeit ist größer (die Steigung der Geraden ist der Geschwindigkeit proportional, d. h. der Tangens des Anstiegwinkels entspricht der Geschwindigkeit).

Die höhere Geschwindigkeit bewirkt eine höhere kinetische Energie (E = M x V²/2) und damit auch eine höhere Aufprallenergie, die auf die Heckscheibe wirkt und diese zum Zerbersten bringt.

In den dargestellten Ausführungsbeispielen sind U-förmige Überrollbügel dargestellt. Der Erfindungsgegenstand kann aber auch bei Profilbügeln (Kassettensystemen) Anwendung finden. Insbesondere bei Aluminiumstrangpressprofilen können die vorhandenen Hohlräume für eine Druckkammer mit Antriebskolben genutzt werden oder auch bei Überrollbügeln die aus Faserverbund oder Hybrid (Kombination verschiedener Werkstoffe wie Kunststoff mit Stahl etc.) hergestellt sind.

### Bezugszeichenliste

- 1: Überrollbügel
- 2: Linker Bügelschenkel
- 3: Rechter Bügelschenkel
- 4: Rohrförmiges gebogenes Querjoch
- 5: Traverse
- 6: Kassettenartiges Gehäuse
- 6 a: Seitenwände
- 6 b: Befestigungslöcher
- 6 c: Boden
- 7: Führungsblock
- 8: Rastdom
- 9: Entsperrhebelarm an Sperrklinke
- 9 a: Zahnungen an Sperrklinke
- 10: Untere Führungselemente
- 11: Gemeinsamer pyrotechnischer Aktuator
- 12: Druckkammerrohr
- 13: Treibspiegelartiger Einsatz
- 14: Auslösbare Haltevorrichtung
- 15: Zylindrisches Rohr
- 16: Antriebskolben

## Patentansprüche

1. Schutzvorrichtung in Kraftfahzeugen zum Personenschutz, welche ein bewegliches Element (1) aufweist, das im Grundzustand durch eine auslösbare Haltevorrichtung (14), gebildet durch eine lösbare fahrzeugfeste Verbindung des beweglichen Elementes (1), in seiner Lage fixiert ist und im Gefahrenfall sensorgesteuert mittels eines gemeinsamen pyrotechnischen Aktuators (11) auslösbar und unter Aktivierung des Schutzes ausstellbar ist, und welche eine Einrichtung (8, 9) zum Verriegeln des ausgestellten beweglichen Elementes aufweist, wobei dem pyrotechnischen Aktuator (11) eine fahrzeugfest mittels ihrer Wandung angebrachte Antriebsdruckkammer (12,15), in welcher ein mit dem beweglichen Element verbundener Antriebskolben (2 mit 13, 16) geführt aufgenommen ist, nachgeschaltet ist, **dadurch gekennzeichnet, dass** die lösbare Verbindung durch eine unmittelbare lokal begrenzte kraft- und /oder formschlüssige oder stoffschlüssige Direktverbindung (14) zwischen der Wandung der Antriebsdruckkammer (12, 15) und dem Antriebskolben (2 mit 13, 16) gebildet ist, welche eine zu lösende Haltekraft aufweist, die mindestens 300 N und maximal 5000 N beträgt.

2. Schutzvorrichtung nach Anspruch 1, **dadurch gekennzeichnet, dass** die Direktverbindung (14) durch eine direkte Verstemmung zwischen der Wandung der Antriebsdruckkammer (12, 15) und dem Antriebskolben (2 mit 13, 16) gebildet ist.

3. Schutzvorrichtung nach Anspruch 1, **dadurch gekennzeichnet, dass** die Direktverbindung (14) durch eine vollständig oder partiell umlaufende rillenartige Verquetschung zwischen der Wandung der Antriebsdruckkammer (12, 15) und dem Antriebskolben (2 mit 13, 16) gebildet ist.

4. Schutzvorrichtung nach Anspruch 1, **dadurch gekennzeichnet, dass** die Direktverbindung (14) durch eine Verbördelung zwischen der Wandung der Antriebsdruckkammer (12, 15) und dem Antriebskolben (2 mit 13, 16) gebildet ist.

5. Schutzvorrichtung nach einem der Ansprüche 1 bis 4 mit einem U-förmigen Überrollbügel (1), als bewegliches Element, der zwei rohrförmige Bügelschenkel (2, 3) und ein verbindendes Querjoch (4) besitzt, als bewegliches Element.

6. Schutzvorrichtung nach Anspruch 5, **dadurch gekennzeichnet, dass** der Antriebskolben durch einen der Bügelschenkel (2) in Verbindung mit einem treibspiegelartigen Einsatz (13) und die Antriebsdruckkammer durch ein fahrzeugfest angebrachtes Druckkammerrohr (12), welches in den Bügelschenkel (2) hineinragt, gebildet ist.

7. Schutzvorrichtung nach Anspruch 5, **dadurch gekennzeichnet, dass** eine Kolben/Zylinder-Einheit bestehend aus einem mit dem Querjoch (4) verbundenen Antriebskolben (16) und einem fahrzeugfest angebrachten zylindrischen, an den pyrotechnischen Aktuator angeschlossenen Rohr (15) vorgesehen ist und die lokale Direktverbindung (14) zwischen dem zylindrischen Rohr (15) und dem Antriebskolben (16) ausgebildet ist.

8. Schutzvorrichtung nach Anspruch 7, **dadurch gekennzeichnet, dass** die Kolben/Zylinder-Einheit als auswechselbare Baueinheit ausgebildet ist.

9. Schutzvorrichtung nach Anspruch 7 oder 8, **dadurch gekennzeichnet, dass** die Komponenten (15, 16) der Kolben/ZylinderEinheit durch Kunststoff-Spritzgießteile gebildet ist.

10. Schutzvorrichtung nach einem der Ansprüche 7 bis 9, **dadurch gekennzeichnet, dass** die Länge des zylindrischen Rohres (15) in Bezug auf die Länge des umfassten Antriebskolben (16) so gewählt ist, dass sich beide Komponenten nur über eine vorgegebene Anfangsstrecke beim Ausstellen des Überrollkörpers (1) überlappen.

## Claims

1. A protection device in motor vehicles for protecting individuals, which has a moveable element (1), which is immobilized in its position in the basic state through a releasable holding device (14), formed by a detachable, vehicle-fixed connection of the moveable element (1), and is releasable in a sensor-controlled manner in case of danger by means of a common pyrotechnical actuator (11) and is deployable upon activation of the protection, and which has a device (8, 9) for the locking of the deployed moveable element, wherein a drive pressure chamber (12, 15) permanently attached to the vehicle by means of its wall, in which a drive piston (2 with 13, 16) connected with the moveable element is received in a controlled manner, is installed downstream from the pyrotechnical actuator (11), **characterized in that** the detachable connection is formed through a direct, locally restricted non-positive and/or positive or integral material direct connection (14) between the wall of the drive pressure chamber (12, 15) and the drive piston (2 with 13, 16), which has a retention force to be released, which is at least 300 N and a maximum of 5000 N.

2. The protection device according to claim 1, **characterized in that** the direct connection (14) is formed by a direct caulking between the wall of the drive pressure chamber (12, 15) and the drive piston (2 with 13, 16).

3. The protection device according to claim 1, **characterized in that** the direct connection (14) is formed by a completely or partially circumferential groove-like compression between the wall of the drive pressure chamber (12, 15) and the drive piston (2 with 13, 16).

4. The protection device according to claim 1, **characterized in that** the direct connection (14) is formed by a flanging between the wall of the drive pressure chamber (12, 15) and the drive piston (2 with 13, 16).

5. The protection device according to one of claims 1 through 4 with a U-shaped rollover bar (1), as a moveable element, which has two tubular bracket legs (2, 3) and a connecting transverse brace (4), as a moveable element.

6. The protection device according to claim 5, **characterized in that** the drive piston is formed through one of the bracket legs (2) in connection with a propelling-surface-like insert (13) and the drive pressure chamber by a pressure chamber tube (12) permanently attached to the vehicle, which extends into the bracket leg (2).

7. The protection device according to claim 5, **characterized in that** a piston/cylinder unit consisting of a drive piston (16) connected with the transverse brace (4) and a cylindrical tube (15) permanently attached to the vehicle and connected to the pyrotechnical actuator is provided and the local direct connection (14) is designed between the cylindrical tube (15) and the drive piston (16).

8. The protection device according to claim 7, **characterized in that** the piston/cylinder unit is designed as a replaceable assembly.

9. The protection device according to claim 7 or 8, **characterized in that** the components (15, 16) of the piston/cylinder unit are formed by plastic injection molded parts.

10. The protection device according to one of claims 7 through 9, **characterized in that** the length of the cylindrical tube (15) with respect to the length of the incorporated drive piston (16) is selected such that both components only overlap by a specified initial distance during the deployment of the rollover body (1).

## Revendications

1. Dispositif de protection des personnes dans des véhicules automobiles, comprenant un élément mobile (1) qui est maintenu en position à l'état de base par un dispositif de retenue (14) déclenchable, formé par une liaison solidarisée au véhicule libérable de l'élément mobile (1), et en cas de danger est déclenchable par commande de capteur au moyen d'un actionneur pyrotechnique commun (11), et est déployable sous l'effet de l'activation de la protection, et qui comprend une installation (8, 9) de verrouillage de l'élément mobile déployé, une chambre de compression d'entraînement (12, 15) montée solidarisée au véhicule au moyen de sa paroi, dans laquelle est logé de façon guidée un piston moteur (2 avec 13, 16) relié à l'élément mobile, étant intercalée en arrière de l'actionneur pyrotechnique (11), **caractérisé en ce que** la liaison libérable est formée par une liaison directe (14) immédiate par complémentarité de force et/ou de forme ou de matière limitée localement entre la paroi de la chambre de compression d'entraînement (12, 15) et le piston moteur (2 avec 13, 16) qui présente une force de rétention à libérer qui s'élève à au moins 300 N et au maximum 5000 N.

2. Dispositif de protection selon la revendication 1, **caractérisé en ce que** la liaison directe (14) est formée par une compression directe entre la paroi de la chambre de compression d'entraînement (12, 15) et le piston moteur (2 avec 13, 16).

3. Dispositif de protection selon la revendication 1, **caractérisé en ce que** la liaison directe (14) est formée par un serrage rainuré s'étendant de manière circulaire complètement ou partiellement entre la paroi de la chambre de compression d'entraînement (12, 15) et le piston moteur (2 avec 13, 16).

4. Dispositif de protection selon la revendication 1, **caractérisé en ce que** la liaison directe (14) est formée par un sertissage entre la paroi de la chambre de compression d'entraînement (12, 15) et le piston moteur (2 avec 13, 16).

5. Dispositif de protection selon l'une des revendications 1 à 4 comportant un arceau de sécurité en U (1), à titre d'élément mobile, possédant deux montants d'arceau tubulaires (2, 3) et une traverse de jonction (4), à titre d'élément mobile.

6. Dispositif de protection selon la revendication 5, **caractérisé en ce que** le piston moteur est formé par un des montants d'arceau (2) en liaison avec un insert (13) de type sabot, et la chambre de compression d'entraînement est formée par un tube de chambre de compression (12) monté solidarisé au véhicule, lequel dépasse dans le montant d'arceau (2).

7. Dispositif de protection selon la revendication 5, **caractérisé en ce qu'**il est prévu une unité piston/cylindre formée d'un piston moteur (16) relié à la traverse (4) et d'un tube (15) cylindrique raccordé à l'actionneur pyrotechnique monté solidarisé au véhicule, et la liaison directe locale (14) est configurée entre le tube cylindrique (15) et le piston moteur (16).

8. Dispositif de protection selon la revendication 7, **caractérisé en ce que** l'unité piston/cylindre est conçue sous forme d'unité modulaire interchangeable.

9. Dispositif de protection selon la revendication 7 ou 8, **caractérisé en ce que** les composants (15, 16) de l'unité piston/cylindre sont formés par des pièces moulées par injection en plastique.

10. Dispositif de protection selon l'une des revendications 7 à 9, **caractérisé en ce que** la longueur du tube cylindrique (15) par rapport à la longueur du piston moteur compris (16) est sélectionnée de telle sorte que les deux composants se chevauchent seulement sur une distance de départ définie lors de la déploiement du corps de sécurité (1).
